# EUROPÄISCHE PATENTSCHRIFT

(11) **EP 2 936 005 B1**
(45) Veröffentlichungstag und Bekanntmachung des Hinweises auf die Patenterteilung: **29.03.2017**
(21) Anmeldenummer: 13821465.5
(22) Anmeldetag: 19.12.2013
(51) Int. Cl.: F24J 2/52, F24J 2/46

(54) **PHOTOVOLTAIKSYSTEM**
PHOTOVOLTAIC SYSTEM
SYSTÈME PHOTOVOLTAÏQUE

(30) Priorität: 19.12.2012 EP 12198275
(43) Veröffentlichungstag der Anmeldung: 28.10.2015
(73) Patentinhaber: Aerocompact GmbH, 6824 Schlins (AT)
(72) Erfinder: MUTHER, Mathias, A-6822 Röns (AT); SEN, Renan, A-6710 Nenzing (AT)
(74) Vertreter: Behrmann, Niels
(86) Internationale Anmeldenummer: PCT/EP2013/077435
(87) Internationale Veröffentlichungsnummer: WO 2014/096216

(56) Entgegenhaltungen:
- WO-A1-97/38185
- WO-A1-2012/116121
- DE-A1-102009 057 408
- JP-A- 2005 217 179
- JP-A- 2007 180 312
- US-A1- 2011 000 519

## Beschreibung

Die vorliegende Erfindung betrifft ein Photovoltaiksystem sowie die Verwendung eines Trägerelements zur Herstellung eines Photovoltaiksystems.

Aus dem Stand der Technik sind Photovoltaiksysteme bekannt, bei denen mehrere Photovoltaikmodule durch Trägerelemente in Form von speziellen Gestellen mit einander verbunden, in einer Montageebene bzw. Aufstellfläche montiert werden und winklig zu dieser ausgerichtet werden, um eine optimierte Sonneneinstrahlung pro Flächeneinheit zu erreichen.

Bei der Montage der bekannten Systeme werden die Photovoltaikmodule jeweils auf die Gestelle aufgebracht, die die Photovoltaikmodule gegenüber einer Montage- bzw. Aufstellebene stützen. Insbesondere werden Photovoltaikmodule auf Gestellte in Form einer Dreieckskonstruktion aufgelegt, wobei die Photovoltaikmodule jeweils auf einem winklig zur Aufstellfläche ausgerichteten Auflageschenkel aufliegen und wobei der Auflageschenkel das Photovoltaikmodul auf jeder Höhe, also jedem Abstand zur Montageebene, stützen. Der Auflageschenkel trägt hierbei das Photovoltaikmodul, stützt es auf jeder Höhe und nimmt, zusammen mit den weiteren Schenkeln, Kräfte in Längsrichtung, die auf das System wirken, auf.

Zum Verbinden einer Vielzahl von Photovoltaikmodulen in mehreren Reihen zu einem flächigen Photovoltaiksystem werden die jeweiligen Reihen über Verbindungsteile verbunden. Beispielsweise werden die jeweiligen Trägerelemente an durchgehenden Schienen montiert. Dies sichert zum einen die Relativlage der Photovoltaikmodule zu einander, als auch die Lage des Photovoltaiksystems gegenüber bzw. in der Montageebene.

Die bekannten Gestelle haben den Nachteil, dass sie durch spezielle Formteile, insbesondere als Aluminiumpressteile, ausgebildet werden, wodurch eine Herstellung dieser Formteile materialintensiv und aufwendig ist. Zudem muss das Gestell als Grundlage der Montage erst kompliziert aufgebaut werden.

Aus der US 2011/000519 A1 ist ein Photovoltaiksystem mit mindestens einem Photovoltaikmodul und Stützmitteln zum Halten des jeweiligen Photovoltaikmoduls in einer einen Neigungswinkel einschließenden Lage einer Montageebene bekannt. Die Stützmittel umfassen für jedes der Photovoltaikmodule erste und zweite Angriffsmittel, die jeweils an einen Rahmenabschnitt des jeweiligen Photovoltaikmoduls angreifen. Die ersten Angriffsmittel, das Photovoltaikmodul und die zweiten Angriffsmittel sind in einer Erstreckungsmittel aufeinanderfolgend angeordnet, wobei die mechanische Verbindung in einer Erstreckungsrichtung zwischen den ersten und den zweiten Angriffsmitteln nur über einen Abschnitt des Photovoltaikmoduls, nämlich einen Rahmenabschnitt des Photovoltaikmoduls, erfolgt.

Zum weiteren Stand der Technik wird verwiesen auf die JP 2007/180310 A sowie die DE 10 2009 057 408 A1.

Aufgabe der vorliegenden Erfindung ist es, ein Photovoltaiksystem anzugeben, das die vorbeschriebenen Nachteile nicht aufweist, das sich durch einfach herzustellende Montageteile und einfache Montage auszeichnet.

Diese Aufgabe wird durch ein System mit den Merkmalen der unabhängigen Erzeugnisansprüche sowie die Verwendung eines Trägerelements mit den Merkmalen des Verwendungsanspruchs gelöst. Vorteilhafte Weiterbildungen der Erfindung sind in den Unteransprüchen angegeben.

In erfindungsgemäß vorteilhafter und überraschender Weise wird durch das erfindungsgemäße Photovoltaiksystem konstruktive Einfachheit und mechanische Stabilität kombiniert mit bestmöglichem Auflage- und Stützverhalten auf der unterliegenden Montageebene, typischerweise realisiert durch eine Dachfläche, ein Fundament oder andere, typischerweise plane und zum Aufsetzen bzw. Auflegen des erfindungsgemäßen Photovoltaiksystems geeignete Flächen; eine Verankerung oder Befestigung ist nicht notwendiger Weise vorgesehen.

Zur Verbesserung einer Auflage des Photovoltaiksystems auf der unterliegenden Montageebene bzw. zum Erzeugen eines (zusätzlichen) Anpressdrucks ist es im Rahmen der Erfindung vorgesehen, den Stützmitteln Luft- bzw. Windleitmittel, etwa in Form eines geeigneten, sich quer zu der Erstreckungsrichtung erstreckenden Winkel- oder Profilblechs, vorzusehen; durch diese Maßnahme werden dann bei oberhalb entlang des montierten Photovoltaiksystems strömender Luft Verwirbelungen bzw. Düseneffekte erzeugt, welche in dem zwischen den Photovoltaikmodulen und der Montageebene gebildeten Zwischenraum einen Unterdruck erzeugt. Dieser Unterdruck wiederum sorgt für einen (zusätzlichen) Anpressdruck der Vorrichtung auf der Montageebene, mit der vorteilhaften Wirkung, dass - strömungs- und damit windabhängig - zusätzlicher Anpressdruck entsteht, bei welcher die Erfordernisse an Beschwerungen od.dgl. Befesti gungs- oder Gewichtselemente reduziert werden können. Vorteilhafte Wirkung hiervon ist dann wiederum eine geringere Dauerbelastung der unterliegenden Dachfläche als Montageebene; lediglich im Strömungsfall würde dann in der weiterbildungsgemäß beanspruchten Weise durch den Unterdruck die zusätzliche Anpresskraft entstehen.

Dadurch, dass das Photovoltaikmodul im erfindungsgemäße bevorzugten Photovoltaiksystem in einem Abschnitt zwischen der ersten und zweiten Angriffsmitteln die mechanische bzw. tragende Verbindung ausschließlich über einen Rahmenabschnitt des Photovoltaikmoduls erfolgt, also das Photovoltaikmodul in diesem Abschnitt nicht von Stützmitteln auf gleicher Höhe gestützt wird und das Photovoltaikmodul somit selbst zur statischen Tragfähigkeit der Konstruktion beiträgt, also selbsttragender Art ist, ergibt sich ein besonders vorteilhafter Aufbau.

Es wird Material gespart, da Elemente der Stützmittel oder sonstiger weiterer Bauteile, die zu diesen Kraftaufnahmen bestimmt sind, entfallen können.

Durch den Wegfall der weiteren mechanischen Verbindung in Längsrichtung zwischen den ersten und der zweiten Angriffsmitteln über Elemente, die nicht Teil des Photovoltaikmoduls sind, ergibt sich auch eine besondere Flexibilität des Systems, da die Photovoltaikmodule nicht in ein starres System gezwungen werden, das in Längsrichtung durch das Photovoltaikmodul und das weitere Element überbestimmt ist. Beispielsweise kann eine solche Überbestimmung in Längsrichtung zu Beschädigungen der Photovoltaikmodule, wenn durch Unterschiedliche Ausdehnung des weiteren Elements und des Photovoltaikmoduls das Photovoltaikmodul durch das weitere Element verzerrt wird.

Bevorzugt umfassen die Stützmittel mindestens ein einstückiges Trägerelement, das an zwei Photovoltaikmodule jeweils randseitig angreift und die Photovoltaikmodule stützt. Durch die Einstückigkeit wird eine besonders einfache Montage ermöglicht. Es müssen nicht umständlich mehrere Teile zusammen gesetzt werden, um eine Montage der Photovoltaikmodule zu ermöglichen. Vielmehr kann das System durch einfaches Anlegen (bzw. Angreifenlassen) der (Photovoltaik-)Module an die Trägermittel unmittelbar in Position gebracht werden. Gegebenenfalls können die Module durch geeignete Fixiermittel, insbesondere Schraub- und/oder Klemmmittel, an den Trägermitteln fixiert werden; wesentlich ist jedoch, dass eine einstückige Verbindung durch die Trägermittel zwischen den Modulen besteht.

Bevorzugt kann der Profilträger durch Kanten bzw. Biegen eines flachen vorgebehandelten Metalls, beispielsweise Aluminium, oder Metalllegierung, hergestellt werden. Diese lassen sich einfach mit üblichen Verarbeitungsmaschinen von Metallfachbetrieben herstellen, wobei das Ausgangsmaterial weit ebenfalls verbreitet ist. Eine umständliche möglicherweise zentrale Produktion, insbesondere durch spezialisierte Herstellungsmaschinen für spezielle Profile, ist somit nicht notwendig. Insgesamt ergeben sich hieraus somit Vorteile sowohl in den Herstellungs- als auch den Logistikkosten.

Weiter bevorzugt greift der Profilträger an die jeweiligen Photovoltaikmodule durch eine Angriffsfläche. Die Angriffsflächen erstrecken sich bevorzugt in einem Winkel 0° und 60°, bevorzugt zwischen 5° und 45°, besonders bevorzugt zwischen 10 ° und 30 °, zu der Montageebene bzw. Aufstellfläche.

Um den Profilträger an die Montageebene anlegen zu können, weist der Profilträger bevorzugt einen Zwischenabschnitt auf, der eine sich in der Montageebene erstreckenden Montageebenenanlagenfläche aufweist und weiter bevorzugt die ersten und die zweiten Angriffsmittel mechanisch (also kraftübertragend) verbindet.

Von besonderem Vorteil kann mit mehreren bevorzugt einstückigen Profilträger auf besonders einfache Weise ein Photovoltaiksystem gebildet werden. Hierbei ist es nicht (wie im Stand der Technik) notwendig, zuerst kompliziert eine Rahmenkonstruktion aus einer Vielzahl von Teilen aufzubauen. Mit einstückigen Profilträgern, die sowohl an einem ersten als auch einem zweiten Photovoltaikmodul anliegen bzw. angreifen, kann auf besonders einfache Weise ein Photovoltaiksystem montiert werden. Die Montage erfolgt hierbei zunächst durch Anlegen der Angriffsmittel an die jeweiligen Photovoltaikmodule. Bei Bedarf können die Photovoltaikmodule anschließend, beispielsweise durch Klemm- und/oder Schraubmittel, fixiert werden und/oder die Trägerelemente an oder in der Montageebene, beispielsweise durch Gewichtselemente und/oder Klemm- und/oder Schraubmittel, ebenfalls fixiert werden.

Hierdurch lässt sich auf vorteilhafte Weise ein Photovoltaiksystem montieren, insbesondere bei dem Photovoltaikmodule in Erstreckungsrichtung in mehreren Reihen und in einer Reihe ebenfalls mehrere Photovoltaikmodule angeordnet sind.

Um möglichst einfach mehrere Photovoltaikmodule in einer Reihe zu vorzusehen, hat es sich als vorteilhaft herausgestellt, dass eines der einstückigen Trägerelemente an den ersten und/oder zweiten Angriffsmitteln jeweils an zwei Photovoltaikmodule angreift. Hierdurch ist zum einen die Relativlage dieser Photovoltaikmodule zu einander gesichert, zudem wird die Anzahl der notwendigen Trägerelemente reduziert, was neben der Montageerleichterung auch den Logistikaufwand reduziert.

Durch die winklige Anordnung zur Montageebene kann, je nach Sonnenstand, eines der Photovoltaikmodule des Photovoltaiksystems einen Schatten auf ein benachbartes weiteres der Photovoltaikmodule werfen. Um dem entgegenzuwirken, hat es sich als vorteilhaft herausgestellt, den Zwischenabschnitt so auszubilden, dass er durch einen ausreichenden Abstand der Photovoltaikmodule einen solchen Schattenwurf auf ein weiteres Photovoltaikmodul verhindert oder zumindest verringert. Insbesondere hat es sich als vorteilhaft herausgestellt, dass der Zwischenabschnitt mindestens dem 1-fachen, bevorzugt dem 1,5 bis 3,5-fachen, weiter bevorzugt dem 2 bis 3-fachen der Höhe der höheren der Angriffsflächen (also dem maximalen Abstand der beiden Angriffsflächen von der Montageebene) entspricht. Diese Werte bieten einen besonders vorteilhaften Kompromiss aus Flächennutzung mit Photovoltaikmodulen durch enge Zusammenstellung und Schattenwurfminimierung.

Um die Lage des Photovoltaiksystems in der Montageebene zu sichern, können an den Stützmitteln, insbesondere an dem Zwischenabschnitt des einstückigen Trägerelements, Befestigungsmittel vorzusehen. Die Befestigungsmittel können einen Form- und/oder Kraftschluss zwischen dem Photovoltaiksystem und der Montageebene sichern.

Insbesondere eignen sich Gewichts- bzw. Beschwerungselemente als Befestigungsmittel, die insbesondere den Zwischenabschnitt der Stützmittel an die Montageebene andrücken. Solche Gewichtselemente zeichnen sich durch ihre einfache Montierbarkeit und einfache Herstellbarkeit aus. Sie sind außerdem unabhängig von der Beschaffenheit der Montageebene einsetzbar, benötigen insbesondere keine Gegengewinde und/oder Einschlagsschichten für Nägel und/oder Schrauben. Diese können jedoch natürlich bei Bedarf und Eignung zusätzlich oder alternativ als Befestigungsmittel eingesetzt werden.

Weiterhin wird Schutz beansprucht für eine erfindungsgemäße Verwendung eines Trägerelements mit den Merkmalen des unabhängigen Verwendungsanspruches. Ein solcher ermöglicht auf besonders vorteilhafte Weise einen Aufbau eines Photovoltaiksystems, bei denen die Photovoltaikmodule selbsttragender Art sind, also selbst zur statischen Tragfähigkeit der Konstruktion beitragen. Zur Vermeidung von Wiederholungen sollen im Rahmen des Photovoltaikmoduls offenbarten Merkmale des Trägerelements gleichermaßen für die Verwendung eines Trägerelements offenbart gelten.

Besonders vorteilhaft weisen die ersten Angriffsmittel einen größeren Abstand zu der Montageebene auf als die zweiten Angriffsmittel, sind also höher als diese. Hierdurch wird es ermöglicht, mit Trägerelement einer einzigen Bauart eine Vielzahl von Photovoltaikmodulen zu verbinden, wobei in Erstreckungsrichtung abwechselnd hohe und tiefe Angriffsflächen auf einander folgen, was insbesondere bei einer Ausrichtung zum Äquator (also beispielsweise auf der Nordhalbkugel zu einer Südseite) eine gewünschte Ausrichtung darstellt.

Um die Photovoltaikmodule auch bei großen Lasten sicher zu stützen, beispielsweise bei zu erwartender starker Schneebelastung auf der Oberfläche, können weitere Stützmittel, insbesondere in Form eines Stützfußes, zum Einsatz kommen, die die jeweiligen Photovoltaikmodule im Verbindungsabschnitt abschnittsweise stützen. Diese weiteren Stützmittel greifen hierzu sowohl an dem Verbindungsabschnitt des Photovoltaikmoduls, als auch an der Montageebene an und bilden eine (weitere) tragende Verbindung zwischen diesen. Gleichwohl bleibt das Photovoltaikmodul im Verbindungsabschnitt außerhalb des Angriffsbereichs der weiteren Stützmittel selbsttragend.

Insbesondere um einem ungewollten Abdecken durch starken Wind entgegen zu wirken, können Abdeckmittel vorgesehen sein, die den (Wind-)Strömungswiderstand des Photovoltaiksystems so beeinflussen, dass Kräfte, die senkrecht zur Montageebene wirken und von der Montageebene weg wirken, minimiert werden

Weitere Vorteile, Merkmale und Einzelheiten der Erfindung ergeben sich aus der nachfolgenden Beschreibung bevorzugter Ausführungsbeispiele sowie anhand der Zeichnungen, in denen gleiche Elemente oder Elemente mit gleicher Funktion mit gleichen Bezugszeichen gekennzeichnet sind. Diese zeigen in:
- Fig. 1: eine schematische Darstellung eines ersten Ausführungsbeispiels eines Trägerelements zur Herstellung eines Photovoltaiksystems in einer perspektivischen Ansicht,
- Fig. 2: eine schematische Darstellung von vier der Trägerelemente gemäß Fig. 1 mit einem Photovoltaikmodul und einem Windschutz in einer perspektivischen Ansicht,
- Fig. 3: Fig. 2 in einer seitlichen Schnittansicht,
- Fig. 4: ein Photovoltaiksystem mit einer Vielzahl von Photovoltaikmodulen, die über Trägerelemente gem. Fig. 1 verbunden sind in einer perspektivischen Ansicht,
- Fig. 5: Fig. 4 in einer Draufsicht,
- Fig. 6: ein zweites Ausführungsbeispiel eines Trägerelements in einer perspektivischen Ansicht,
- Fig. 7: das Trägerelement aus Fig. 6 mit Fixiermitteln,
- Fig. 8: ein System mit einem zweiten Ausführungsbeispiel eines Trägerelements sowie mit einem ausschnittsweise gezeigten dritten Ausführungsbeispiels eines Trägerelements,
- Fig. 9: das System aus Fig. 8 mit zwei aufgebrachten Photovoltaikmodulen in einer Seitenansicht,
- Fig. 10: Fig. 9 in einer perspektivischen Ansicht,
- Fig. 11: ein Photovoltaiksystem mit einer Vielzahl von Photovoltaikmodulen sowie Trägerelementen gem. Fig. 8;
- Fig. 12 bis Fig. 15:: verschiedene Ansichten einer bevorzugten Ausführungsform der Erfindung zum Erzeugen eines Anpressdrucks der Photovoltaikvorrichtung auf einer unterliegenden Montagefläche im Fall einer Luft- bzw. Windströmung mittels eines quer verlaufenden Schlitzes und diesem zugeordnete Leitmitteln in Form eines Leitblechs zum Herbeiführen einer Strömungs-Düsenwirkung; und
- Fig. 16: eine schematische Seitenansicht einer weiteren Variante der Lösung gemäß Fig. 12 bis 15.

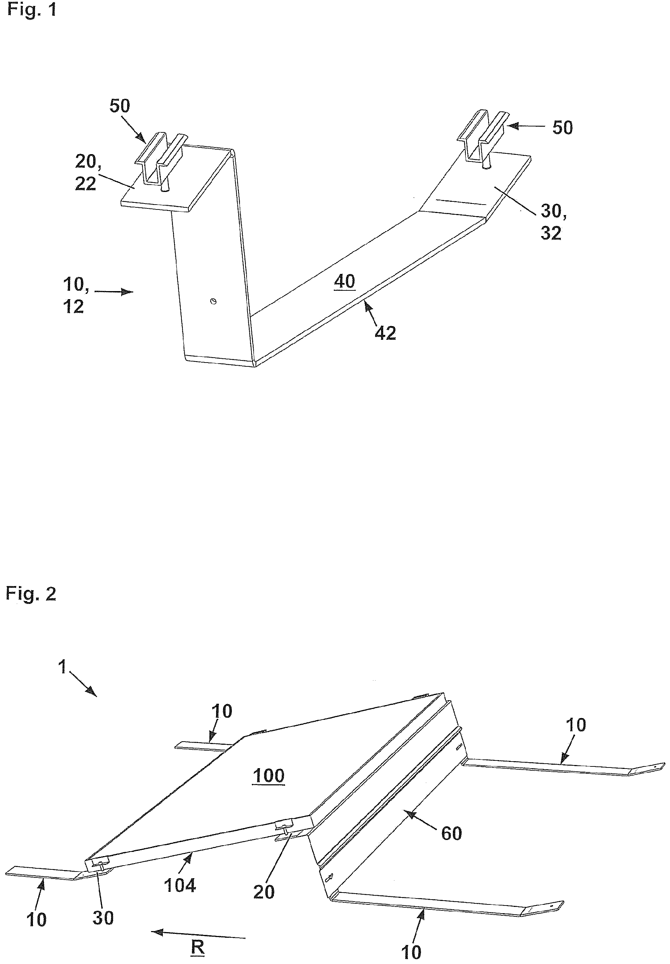

Fig. 1 zeigt ein erstes Ausführungsbeispiel von Stützmitteln 10 mit einem Trägerelement 12 zum Stützen eines Photovoltaikmoduls in einem Photovoltaiksystem. Es umfasst erste Angriffsmittel 20 mit einer ersten Angriffsfläche 22 zum unmittelbaren Anlegen an einen Rahmenabschnitt eines Photovoltaikmoduls, zweite Angriffsmittel 30 mit einer zweiten Angriffsfläche 32 einen Zwischenabschnitt 40 mit einer Montageebenenanlagenfläche 42, die an der Montageebene anliegt. An den Angriffsmittel sind jeweils Fixiermittel 50 in Form von Klemmmitteln zum Fixieren der Photovoltaikmodule gegenüber den Stützmitteln 10 vorgesehen.

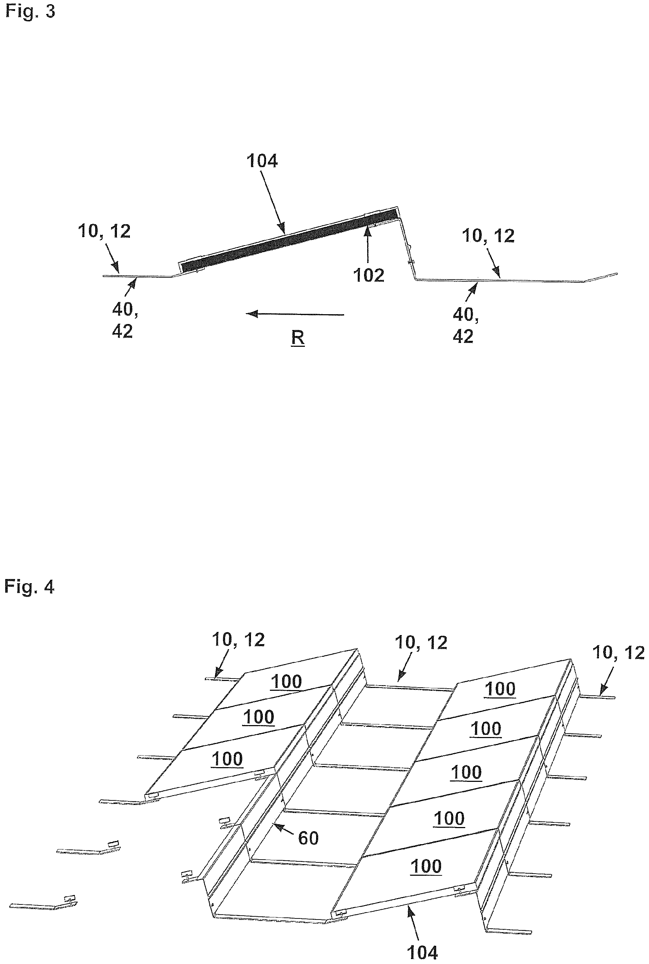

Fig. 2 zeigt ein Photovoltaiksystem 1 mit einem Photovoltaikmodul 100 und Stützmitteln 10, umfassend vier der in Fig. 1 gezeigten Trägerelemente 12 in einer perspektivischen Ansicht. Fig. 3 zeigt dieses in einem Querschnitt. Die ersten Angriffsmittel 20, das Photovoltaikmodul 100, und die zweiten Angriffsmittel 30 sind in Erstreckungsrichtung R hinter einander angeordnet. An einer Hochkante, also an einem den Angriffsmitteln der Trägerelemente 12 mit größerem Abstand zu der Montageebene zugeordneten Abschnitt, sind Abdeckmittel 60 in Form eines Windblechs vorgesehen, die das Strömungsverhalten so verändern, dass eine senkrecht zur Montageebene wirkende Kraft, die zu einem Entfernen des Photovoltaikmoduls 100 aus der Montagebene führen würde, verkleinert wird.

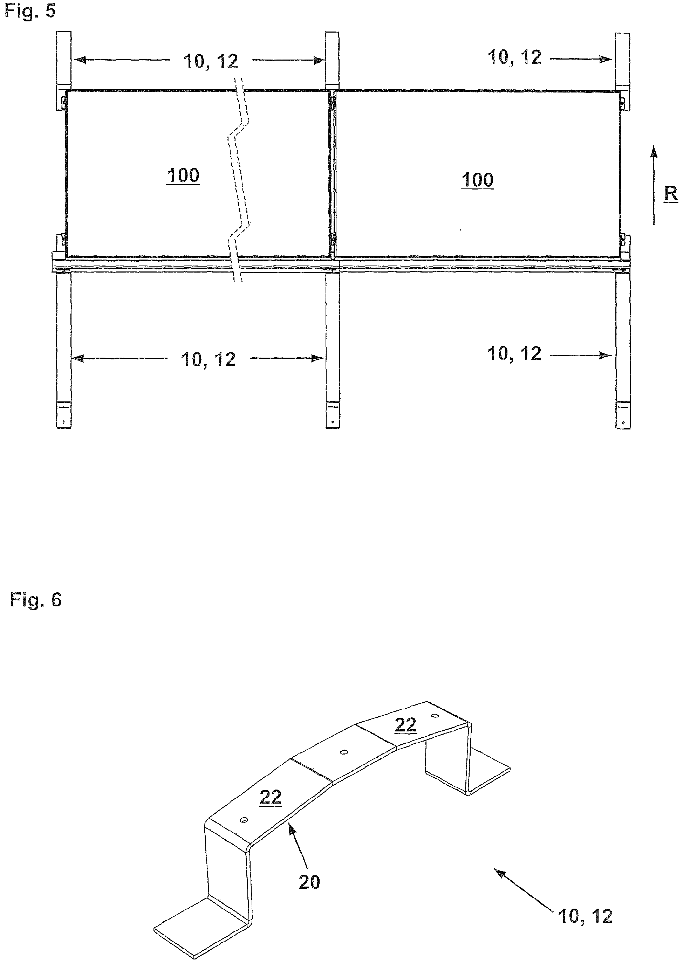

In Fig. 4 ist eine Vielzahl von Photovoltaikmodulen 100 in einer perspektivischen Ansicht gezeigt, die über eine Vielzahl von Trägerelementen 12 zu einem Gesamtsystem verbunden sind. Fig. 5 zeigt einen Ausschnitt dieses Systems in einer schematischen Draufsicht. In einem Rahmenabschnitt 102 ist das Photovoltaikmodul 100 selbstragender Art, trägt also zur Tragfähigkeit des Gesamtsystems bei.

Zur Montage des Photovoltaiksystems werden zunächst mehrere Träger-elemente 12 in der Montageebene in Position gebracht. Anschließend werden Photovoltaikmodule so auf die Trägerelemente 12 angelegt, dass sie in Erstreckungsrichtung R auf beiden Seiten, also beidseitig, jeweils an den Angriffsflächen von zwei Trägerelementen 12 anliegen. Zur Sicherung der Lage relativ zu den Trägerelementen 12 werden die Photovoltaikmodule durch Fixiermittel 50 in Form von Klemmmitteln an den Angriffsmitteln 20 bzw. 30 fixiert. Hierdurch wird zusätzlich mittelbar die Lage der Trägerelemente 12 zu einander festgelegt.

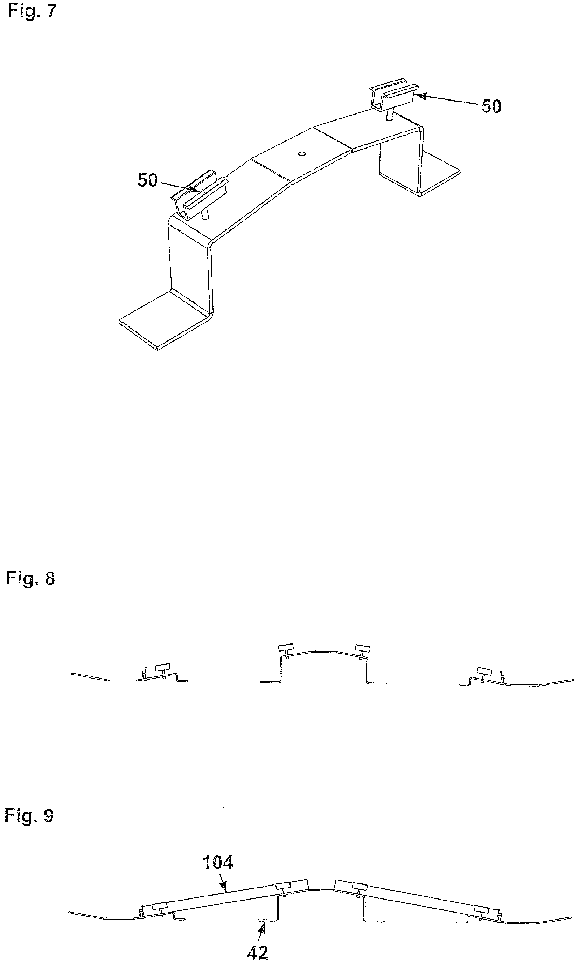

Fig. 6 und Fig. 7 zeigen ein weiteres Ausführungsbeispiel von Stützmitteln 10 mit einem Trägerelement 12 zum Stützen eines Photovoltaikmoduls in einem Photovoltaiksystem, wobei in Fig. 7 zusätzliche Fixiermittel in Form von Klemmmitteln zum Fixieren der Photovoltaikmodule 100 an den Stützmitteln 10 mit dargestellt sind. Die Stützmittel 10 weisen beidseitig erste Angriffsmittel 20 mit einer Angriffsfläche 22 zum Anlegen von Photovoltaikmodulen auf.

Wie in Fig. 8 gezeigt, umfassen in diesem Ausführungsbeispiel die Stützmittel 10 zum Stützen von Photovoltaikmodulen weitere Trägerelemente 14. Zur Montage des Photovoltaiksystems werden zunächst mehrere der Trägerelemente 12 und der weiteren Trägerelemente 14 in der Montageebene in Position gebracht. Anschließend werden Photovoltaikmodule 100 so auf die Trägerelemente 12 angelegt, dass sie in Erstreckungsrichtung auf einer Seite an den Angriffsflächen von zwei der Trägerelemente 12 anliegen und auf der anderen Seite an den Angriffsflächen von zwei der weiteren Trägerelemente 14 anliegen. Zur Sicherung der Lage relativ zu den Trägerelementen 12 und den weiteren Trägerelementen 14 werden die Photovoltaikmodule durch Klemmmittel an den Angriffsmitteln 20 bzw. 30 fixiert. Hierdurch wird zusätzlich mittelbar die Lage der Trägerelemente 12 und der weiteren Trägerelemente 14 zu einander festgelegt.

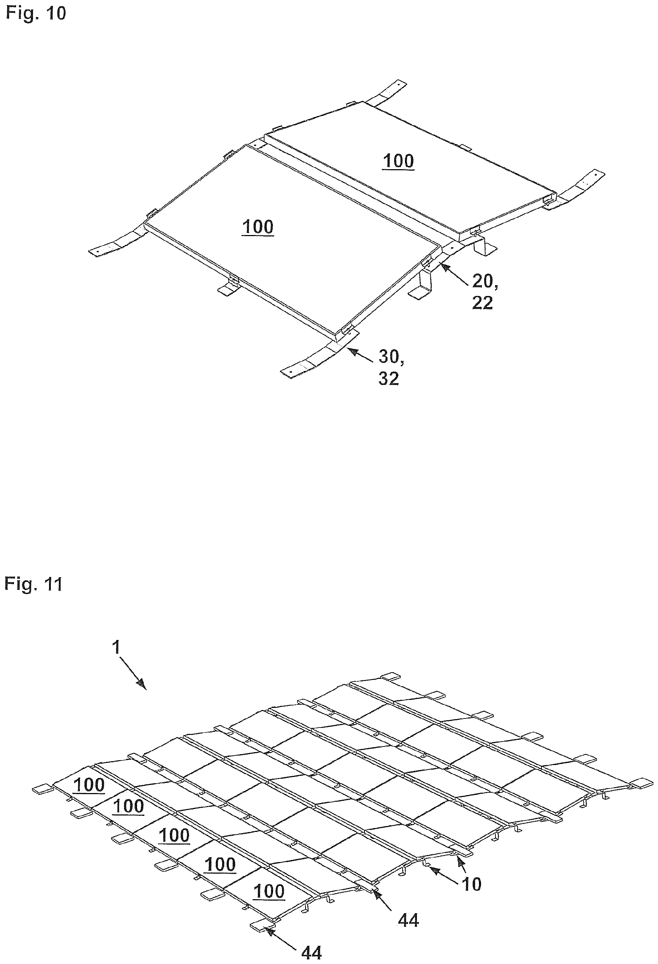

In Fig. 9 und Fig. 10 sind auf diese Art eine Vielzahl von Photovoltaikmodule 100 durch Stützmittel 10 zu einem Phtotovoltaiksystem montiert.

Fig. 11 zeigt eine Vielzahl von Photovoltaikmodulen 100, die durch die Stützmittel 10 in mehreren Reihen als Photovoltaiksystem angeordnet sind. An den weiteren Trägerelementen 14 sind Befestigungsmitteln in Form von die Trägerelemente 14 übergreifenden Gewichtselementen 44, die die Lage und den Zusammenhalt des Photovoltaiksystem in der Montageebene sichern, ohne dass dieses aufwendig an oder in der Montageebene durch Schrauben oder dergleichen fixiert werden muss.

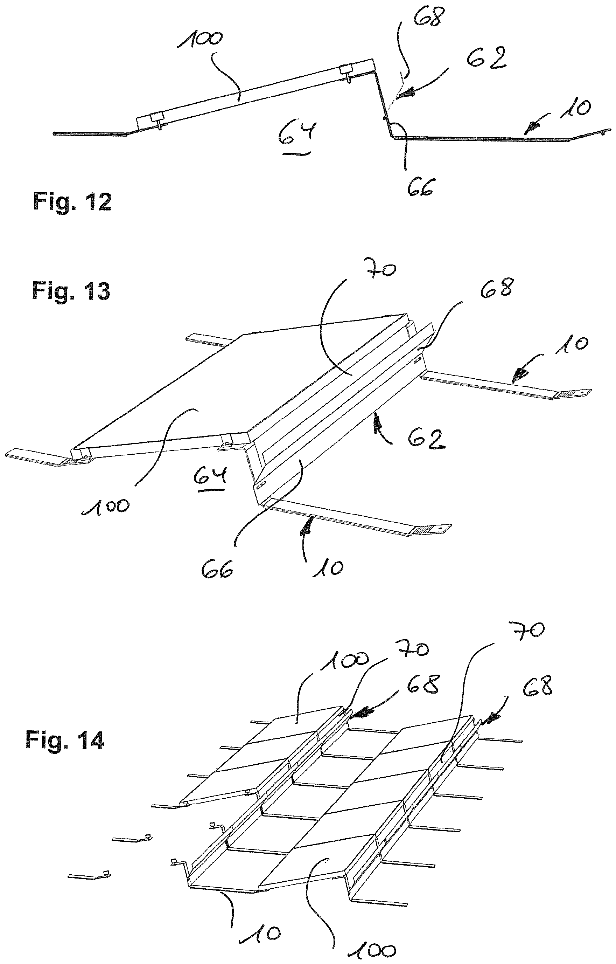

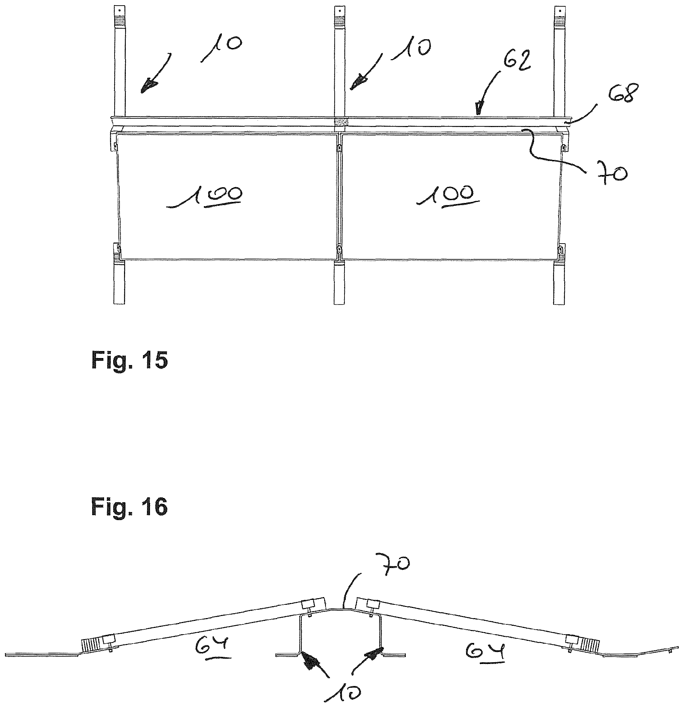

Die Fig. 12 und 15 zeigen eine erste Variante der Erfindung als bevorzugtes Ausführungsbeispiel. Mit dem Zweck, bei Wind bzw. Luftströmung, insbesondere entlang der Erstreckungsrichtung (also betreffend die Figurenebenen der Fig. 12 bis 15 in horizontaler Richtung) einen zusätzlichen Anpressdruck der gezeigten Vorrichtung in Richtung auf die unterliegende Montageebene zu erzeugen, ist in dem Ausführungsbeispiel der Fig. 12 bis 15 (ansonsten analog zu den vorbeschriebenen Darstellungen und Beschreibungen) ein zusätzliches, sich senkrecht zur Erstreckungsrichtung (also vertikal zur Figurenebene) erstreckendes Leitblech in Form eines Winkelblechs 62 zugeordnet. Dieses Winkelblech 62 erzeugt zwischen einer oberen freien Kante eines Photovoltaikmoduls 100 und der oberen freien Kante des Blechs 62 einen Strömungsschlitz bzw. eine Strömungsdüse, mit der Wirkung, dass dann die vorbeiströmende Luft einen Unterdruck im Zwischenraum 64 zum Boden hin bewirkt (wobei dann etwa die vorbeschriebenen Abdeckmittel (Abdeckbleche) 60 an jeweils vorgesehenen Stellen geeignete Durchbrüche bzw. Öffnungen aufweisen, alternativ auch entfallen können). Wiederum alternativ könnten derartigen, in den Figuren nicht gezeigten Löchern bzw. Durchbrüchen in vorhandenen Abdeckblechen 60 (etwa Fig. 2) jeweils nur konkret lokale Bleche zugeordnet sein, die sich nicht durchgängig längs erstrecken.

Die Detailansichten der Fig. 12 bis 15 verdeutlichen die konkrete konstruktive Ausgestaltung, insbesondere des Leitblechs 62; im dargestellten durchgehenden Fall handelt es sich um ein doppelt abgewinkeltes bzw. querschnittlich gekröpftes Winkelblech, welches etwa in der in der Profilansicht der Fig. 12 gezeigten Weise einen Schlitz freilegt. Insoweit modifiziert diese Lösung das vollständig geschlossene Abdeckblech 60 (etwa gezeigt in Fig. 2) in dem lediglich in einem unteren bzw. bodenseitigen Bereich 66 des Abdeckblechs 62 Trägerkontakt besteht, während ein abgewinkelter (abgekröpfter) Bereich 68 des Winkelblechs einen Abstand zur Trägerstruktur 10 ausbildet, so dass in der etwa in Fig. 13 gezeigten Weise ein Querschlitz 70.

In ansonsten bekannter Weise führt dann eine Luftströmung oberhalb bzw. entlang des Moduls 10 bzw. der Modulanordnung (Fig. 14) zu einem Düsen- bzw. Unterdruckeffekt im Zwischenraum 64, mit der Wirkung, dass die Gesamtanordnung in der vorbeschriebenen Weise auf den Unterliegenden (und in den Fig. nicht näher gezeigten) Boden gepresst wird. Zusätzlich zur Perspektivansicht eines (teilweise) montierten Systems gemäß Fig. 14 verdeutlicht die Draufsicht der Fig. 15 weitere konstruktive Details bzw. die geometrischen Verhältnisse des beschriebenen Ausführungsbeispiels.

Ein analoger Gedanke gilt für die weitere Ausführungsform der Fig. 15. Hier würden die Stützmittel 10 in nicht näher gezeigter Art zwar eine durchgängige Verblendung aufweisen können, welche jedoch dann zum Zweck der Erzeugung von Düsen entsprechende Durchbrüche bzw. Löcher aufweisen. Auch hier ist positive Wirkung das Erzeugen eines Unterdrucks in den Zwischenräumen 64 zur (nicht gezeigten) unterliegenden Montagefläche.

Die vorliegende Erfindung ermöglicht insgesamt eine besonders einfache und fehlerunanfällige Montage eines Photovoltaiksystems, wobei die für die Montage notwendigen Einzelteile sich auf überraschend einfache und materialsparende Weise herstellen lassen.

## Patentansprüche

1. Photovoltaiksystem (1) mit mindestens einem Photovoltaikmodul (100) und Stützmitteln (10) zum Stützen und/oder Halten des jeweiligen Photovoltaikmoduls (100) in einer einen Neigungswinkel einschließenden Lage zu einer Montageebene, wobei die Stützmittel (10) für jedes der Photovoltaikmodule (100) erste und zweite Angriffsmittel (20 bzw. 30) umfassen, die jeweils an einen Rahmenabschnitt (102) des zugehörigen Photovoltaikmoduls (100) angreifen, wobei die ersten Angriffsmittel (20), das Photovoltaikmodul (100) und die zweiten Angriffsmittel (30) in einer Erstreckungsrichtung (R) auf einander folgend angeordnet sind,
wobei den Stützmitteln Luft- und/oder Windleitmittel (62) in Form eines Leitblechs, das zwischen einer oberen freien Kante eines der Photovoltaikmodule (100) und der oberen freien Kante des Leitblechs (62) einen Strömungsschlitz ausbildet so zugeordnet sind, dass bei einer insbesondere in der Erstreckungsrichtung (R) wirksamen Luftströmung oberhalb oder entlang des Photovoltaiksystems ein Unterdruck in einem zwischen mindestens einem der Photovoltaikmodule und der unterliegenden Montageebene gebildeten Zwischenraum entsteht.

2. Photovoltaiksystem nach Anspruch 1,
**dadurch gekennzeichnet,**
**dass** die Stützmittel (10) mindestens ein einstückiges Trägerelement (12, 14), insbesondere als ein Flachprofil, bevorzugt als vorbehandeltes Metallwerkstück, umfassen, das sowohl einends die ersten oder zweiten Angriffsmittel (20 bzw. 30) für ein erstes Photovoltaikmodul (100) als auch anderenends die ersten oder zweiten Angriffsmittel (20 bzw. 30) für ein zweites Photovoltaikmodul (100) ganz oder teilweise ausbildet.

3. Photovoltaiksystem nach Anspruch 2,
**dadurch gekennzeichnet,**
**dass** mindestens eines der einstückigen Trägerelemente (12, 14) in dem die ersten bzw. zweiten Angriffsmittel (20 bzw. 30) für das erste Photovoltaikmodul ausbildenden Abschnitt und/oder in dem die ersten bzw. zweiten Angriffsmittel für das zweite Photovoltaikmodul ausbildenden Abschnitt eine erste und/oder zweite Angriffsfläche (22; 32) zum Angreifen an das Photovoltaikmodul (100) aufweist, die sich in einem Winkel zwischen 0° und 60°, bevorzugt zwischen 5° und 45°, besonders bevorzugt zwischen 10° und 30°, und/oder im Neigungswinkel des zugehörigen Photovoltaikmoduls (100), zur Montageebene erstreckt.

4. Photovoltaiksystem nach Anspruch 2 oder 3,
**dadurch gekennzeichnet,**
**dass** das Trägerelement (12, 14) einen Zwischenabschnitt (40) mit einer sich in der Montageebene erstreckenden Montageebenenanlagenfläche (42) aufweist,
wobei der Zwischenabschnitt (40) eine Länge aufweist, die mindestens dem 1-fachen, bevorzugt dem 1,5 bis 3,5-fachen, weiter bevorzugt dem 2 bis 3-fachen, des maximalen Abstandes der ersten und/oder zweiten Angriffsfläche (22 bzw. 32) von der Montageebene entspricht
und/oder im Zwischenabschnitt Befestigungsmittel zum Befestigen des Trägerelements (12, 14) an oder auf der Montageebene vorgesehen sind.

5. Photovoltaiksystem nach Anspruch 4,
**dadurch gekennzeichnet,**
**dass** die Befestigungsmittel ein übergreifendes Gewichtselement umfassen.

6. Photovoltaiksystem nach einem der Ansprüche 2 bis 5,
**dadurch gekennzeichnet,**
**dass** jedem Photovoltaikmodul (100) beidseitig zwei Trägerelemente (12, 14) zugeordnet sind,
wobei bevorzugt mindestens eines der Trägerelemente mit der ersten und/oder zweiten Angriffsfläche (22 bzw. 32) jeweils zwei benachbarte Photovoltaikmodule (100) stützt.

7. Photovoltaiksystem nach einem der vorhergehenden Ansprüche,
**dadurch gekennzeichnet,**
**dass** die ersten Angriffsmittel (20) einen größeren Abstand zu der Montageebene aufweisen als die zweiten Angriffsmittel (30).

8. Photovoltaiksystem nach einem der vorhergehenden Ansprüche,
**dadurch gekennzeichnet,**
**dass** der Neigungswinkel zwischen 0° und 60°, bevorzugt zwischen 5° und 45°, besonders bevorzugt zwischen 10° und 30°, beträgt.

9. Photovoltaiksystem nach einem der vorhergehenden Ansprüche,
**dadurch gekennzeichnet,**
**dass** mehrere Photovoltaikmodule (100) durch Verbindung durch Stützmittel (10) in mehreren in Erstreckungsrichtung (R) auf einander folgenden Reihen angeordnet sind.

10. Photovoltaiksystem nach einem der vorhergehenden Ansprüche,
**dadurch gekennzeichnet,**
**dass** Abdeckmittel (60) vorgesehen sind, die so ausgebildet und angeordnet sind, dass sie das Windströmungsverhalten so beeinflussen, dass eine Windkraft, die die Photovoltaikmodule (100) von der Montageebene weg beschleunigen würde, minimiert wird.

11. Photovoltaiksystem nach einem der vorhergehenden Ansprüche,
**dadurch gekennzeichnet,**
**dass** mindestens ein Stützelement, insbesondere Stützfuß, in dem Zwischenabschnitt (40) mindestens eines der Photovoltaikmodule (100) vorgesehen ist, der dieses oder diese Photovoltaikmodule (100) in dem Zwischenabschnitt (40) zumindest abschnittsweise stützt.

12. Photovoltaiksystem nach einem der vorhergehenden Ansprüche,
**dadurch gekennzeichnet,**
**dass** den ersten und/oder zweiten Angriffsmitteln (20 bzw. 30) Fixiermittel 50, insbesondere Klemm- und/oder Schraubmittel, zum Fixieren der Photovoltaikmodule (100) an den Angriffsmitteln (20 bzw. 30), zugeordnet sind.

13. Verwendung eines Trägerelements (12, 14) mit einem Montageebenenabschnitt (42) zur Montage auf oder an einer unterliegenden Montageebene, einer ersten, gegenüber dem Montageebenenabschnitt (42) abgewinkelten Angriffsfläche (22) zum mechanischen Verbinden mit einem ersten Rahmenabschnitt eines ersten Photovoltaikmoduls (100) und einer zweiten, gegenüber dem Montageebenenabschnitt (42) abgewinkelten Angriffsfläche (32) zum mechanischen Verbinden mit einem zweiten Rahmenabschnitt eines zweiten Photovoltaikmoduls (100) zur Herstellung eines Photovoltaiksystems (1) mit mehreren Photovoltaikmodulen (100), nach einem der vorhergehenden Ansprüche, wobei das erste und das zweite Photovoltaikmodul (100) zu einander benachbart montiert sind,
**dadurch gekennzeichnet,**
**dass** das Trägerelement (12, 14), insbesondere als Profilträgerelement, einstückig ausgebildet ist.

14. Verwendung eines einstückigen Trägerelements nach Anspruch 13
**dadurch gekennzeichnet,**
**dass** sich die erste und zweite Angriffsfläche (22 bzw. 32) in parallelen Ebenen erstrecken und/oder zwischen den Angriffsflächen (22 bzw. 32) ein Zwischenabschnitt vorgesehen ist, der in einem Winkel zwischen 0° und 60°, bevorzugt zwischen 5° und 45°, besonders bevorzugt zwischen 10° und 30°, zu den jeweiligen Angriffsflächen angeordnet ist.

## Claims

1. Photovoltaic system (1) comprising at least one photovoltaic module (100) and supporting means (10) for supporting and/or retaining the respective photovoltaic module (100) in a position relative to an assembly plane, said position forming an inclination angle relative to an assembly plane,
wherein the supporting means (10) comprise first and second engaging means (20 or 30) for each of the photovoltaic modules (100), each said engaging means engaging onto a frame portion (102) of the corresponding photovoltaic module (100), wherein the first engaging means (20), the photovoltaic module (100), and the second engaging means (30) are arranged in a successive manner in a direction (R) of extension,
wherein air and/or wind conducting means (62) in the form of a conducting metal sheet, which forms a flow slot between an upper free edge of one of the photovoltaic modules (100) and the upper free edge of the conducting metal sheet (62), are assigned to the supporting means such that a vacuum is generated in an intermediate space formed between at least one of the photovoltaic modules and the underlying assembly plane in the event of an airflow, which acts in particular in the direction (R) of extension, above or along the photovoltaic system.

2. Photovoltaic system according to claim 1,
**characterized in that**
the supporting means (10) comprise at least one single-piece carrier element (12, 14), in particular as a flat profile, preferably as a pre-treated metal workpiece, which completely or partially forms at one end the first or second engaging means (20 or 30) for a first photovoltaic module (100) and at the other end completely or partially forms the first or second engaging means (20 or respectively 30) for a second photovoltaic module (100).

3. Photovoltaic system according to claim 2,
**characterized in that**
at least one of the single-piece carrier elements (12, 14), in the portion forming the first or respectively second engaging means (20 or 30) for the first photovoltaic module and/or in the portion forming the first or respectively second engaging means for the second photovoltaic module has a first and/or second engaging surface (22; 32) for engaging onto the photovoltaic module (100), which extends at an angle between 0° and 60°, preferably at an angle between 5° and 45°, particularly preferably between 10° and 30° in an inclination angle of the corresponding photovoltaic module (100), to the assembly plane.

4. Photovoltaic system according to claim 2 or 3,
**characterized in that**
the carrier element (12, 14) has an intermediate portion (40) with an assembly plane contact surface (42) extending in the assembly plane, wherein the intermediate portion (40) has a length which corresponds to 1 time, preferably to 1.5 to 3.5 times, further preferably to 2 to 3 times the maximum distance of the first and/or second engaging surface (22 or 32) from the assembly plane and/or the fastening means for fastening the carrier element (12, 14) to the assembly plane are provided in the intermediate portion.

5. Photovoltaic system according to claim 4,
**characterized in that**
the fastening means comprise an over-engaging weight element.

6. Photovoltaic system according to one of claims 2 to 5,
**characterized in that**
carrier elements (12, 14) are associated on both sides to each photovoltaic module (100),
wherein preferably at least one of the carrier elements supports, together with the first and/or second engaging surface (22 or 32) in each case two neighboring photovoltaic modules (100).

7. Photovoltaic system according to one of the preceding claims,
**characterized in that**
the first engaging means (20) have a greater distance to the assembly plane than the second engaging means (30).

8. Photovoltaic system according to one of the preceding claims,
**characterized in that**
the inclination angle is between 0° and 60°, preferably between 5° and 45°, and particularly preferably between 10° and 30°.

9. Photovoltaic system according to one of the preceding claims,
**characterized in that**
multiple photovoltaic modules (100) are arranged in multiple rows following one another in the direction (R) of extension by connection by supporting means (10).

10. Photovoltaic system according to one of the preceding claims,
**characterized in that**
covering means (60) are provided, which are configured and arranged such that they influence wind flow behavior so that a wind force, which would accelerate the photovoltaic modules (100) away from the assembly plane, is minimized.

11. Photovoltaic system according to one of the preceding claims,
**characterized in that**
at least one supporting element, in particular supporting foot, is provided in the intermediate portion (40) of at least one of the photovoltaic modules (100), and at least in sections supports this or these photovoltaic modules (100) in the intermediate portion (40).

12. Photovoltaic system according to one of the preceding claims,
**characterized in that**
fixing means (50), in particular clamping or screwing means, are associated to the first and/or second engaging means (20 or 30), for fastening the photovoltaic modules (100) on the engaging means (20 or 30).

13. Use of a carrier element (12, 14) with an assembly plane portion (42) for assembly on or at underlying assembly plane, a first engaging surface (22) angled relative to the assembly plane portion (42) for mechanically connecting to a first frame portion of a first photovoltaic module (100) and a second engaging surface (22) angled relative to the assembly plane portion (42) for mechanically connecting to a second photovoltaic module (100) for production of a photovoltaic system (1) with multiple photovoltaic modules (100), according to one of the preceding claims, wherein the first and second photovoltaic modules (100) are mounted neighboring one another, **characterized in that**
the carrier element (12, 14), in particular as a profile carrier element, is formed integrally.

14. Use of an integral carrier element according to claim 13,
**characterized in that**
the first and second engaging surfaces (22 or 32) extend in parallel planes and/or **in that** an intermediate portion is provided between the engaging surfaces (22 or 32), which is arranged at an angle between 0° and 60°, preferably between 5° and 45°, particularly preferably between 10° and 30° relative to the respective engaging surfaces.

## Revendications

1. Système photovoltaïque (1) avec au moins un module photovoltaïque (100) et des moyens de soutien (10) pour soutenir et/ou maintenir le module photovoltaïque respectif (100) dans une position formant un angle d'inclinaison par rapport à un plan de montage,
dans lequel les moyens de soutien (10) pour chacun des modules photovoltaïques (100) comprennent des premiers et des deuxièmes moyens d'accrochage (20 ou 30), qui s'accrochent respectivement à une partie de châssis (102) du module photovoltaïque correspondant (100), dans lequel les premiers moyens d'accrochage (20), le module photovoltaïque (100) et les deuxièmes moyens d'accrochage (30) sont disposés l'un à la suite de l'autre dans une direction d'extension (R),
dans lequel des moyens de déviation de l'air et/ou du vent (62) sous la forme d'un déflecteur qui forme une fente d'écoulement entre une arête supérieure libre d'un des modules photovoltaïques (100) et l'arête supérieure libre du déflecteur (62) sont associés aux moyens de soutien de telle manière que, lors d'un écoulement d'air agissant en particulier dans la direction d'extension (R), il apparaît au-dessus ou le long du système photovoltaïque une dépression dans un espace intermédiaire formé entre au moins un des modules photovoltaïques et le plan de montage sous-jacent.

2. Système photovoltaïque selon la revendication 1, **caractérisé en ce que** les moyens de soutien (10) comprennent au moins un élément de support en une pièce (12, 14), en particulier sous forme de profilé plat, de préférence de pièce métallique prétraitée, qui forme entièrement ou en partie aussi bien à une extrémité les premiers ou les deuxièmes moyens d'accrochage (20 ou 30) pour un premier module photovoltaïque (100) qu'à l'autre extrémité les premiers ou les deuxièmes moyens d'accrochage (20 ou 30) pour un deuxième module photovoltaïque (100).

3. Système photovoltaïque selon la revendication 2, **caractérisé en ce qu'**au moins un des éléments de support en une pièce (12, 14) présente dans la partie formant les premiers ou les deuxièmes moyens d'accrochage (20 ou 30) pour le premier module photovoltaïque et/ou dans la partie formant les premiers ou les deuxièmes moyens d'accrochage pour le deuxième module photovoltaïque une première et/ou une deuxième face d'accrochage (22; 32) pour s'accrocher au module photovoltaïque (100), face qui s'étend sous un angle compris entre 0° et 60°, de préférence entre 5° et 45°, de préférence encore entre 10° et 30°, et/ou suivant l'angle d'inclinaison du module photovoltaïque correspondant (100), par rapport au plan de montage.

4. Système photovoltaïque selon la revendication 2 ou 3, **caractérisé en ce que** l'élément de support (12, 14) présente une partie intermédiaire (40) avec une face d'appui au plan de montage (42) s'étendant dans le plan de montage, dans lequel la partie intermédiaire (40) présente une longueur, qui correspond au moins à 1 fois, de préférence à 1,5 fois à 3,5 fois, de préférence encore à 2 à 3 fois, la distance maximale de la première et/ou de la deuxième face d'accrochage (22 ou 32) par rapport au plan de montage, et/ou il est prévu dans la partie intermédiaire des moyens de fixation pour fixer l'élément de support (12, 14) au plan de montage ou sur le plan de montage.

5. Système photovoltaïque selon la revendication 4, **caractérisé en ce que** les moyens de fixation comprennent un élément pesant chevauchant.

6. Système photovoltaïque selon l'une quelconque des revendications 2 à 5, **caractérisé en ce que** deux éléments de support (12, 14) sont associés de part et d'autre de chaque module photovoltaïque (100), dans lequel de préférence au moins un des éléments de support soutient avec la première et/ou la deuxième face d'accrochage (22 ou 32) chaque fois deux modules photovoltaïques (100) voisins.

7. Système photovoltaïque selon l'une quelconque des revendications précédentes, **caractérisé en ce que** les premiers moyens d'accrochage (20) présentent une plus grande distance du plan de montage que les deuxième moyens d'accrochage (30).

8. Système photovoltaïque selon l'une quelconque des revendications précédentes, **caractérisé en ce que** l'angle d'inclinaison vaut entre 0° et 60°, de préférence entre 5° et 45°, et de préférence encore entre 10° et 30°.

9. Système photovoltaïque selon l'une quelconque des revendications précédentes, **caractérisé en ce que** plusieurs modules photovoltaïques (100) sont disposés en plusieurs lignes se succédant dans la direction d'extension (R) par connexion à l'aide de moyens de soutien (10).

10. Système photovoltaïque selon l'une quelconque des revendications précédentes, **caractérisé en ce qu'**il est prévu des moyens de recouvrement (60), qui sont configurés et disposés de telle manière qu'ils influencent le comportement d'écoulement du vent de façon à minimiser une force de vent qui écarterait les modules photovoltaïques (100) du plan de montage.

11. Système photovoltaïque selon l'une quelconque des revendications précédentes, **caractérisé en ce qu'**il est prévu au moins un élément de soutien, en particulier un pied de soutien, dans la partie intermédiaire (40) d'au moins un des modules photovoltaïques (100), qui supporte au moins localement ce ou ces module(s) photovoltaïque(s) (100) dans la partie intermédiaire (40).

12. Système photovoltaïque selon l'une quelconque des revendications précédentes, **caractérisé en ce que** des moyens de fixation (50), en particulier des moyens de serrage et/ou de boulonnage, sont associés aux premiers et/ou aux deuxièmes moyens d'accrochage (20 ou 30) pour la fixation des modules photovoltaïques (100) aux moyens d'accrochage (20 ou 30).

13. Utilisation d'un élément de support (12, 14) avec une partie de plan de montage (42) pour le montage sur ou à un plan de montage sous-jacent, avec une première face d'accrochage (22) coudée par rapport à la partie de plan de montage (42) pour l'assemblage mécanique avec une première partie de châssis d'un premier module photovoltaïque (100) et avec une deuxième face d'accrochage (32) coudée par rapport à la partie de plan de montage (42) pour l'assemblage mécanique avec une deuxième partie de châssis d'un deuxième module photovoltaïque (100) pour réaliser un système photovoltaïque (1) avec plusieurs modules photovoltaïques (100) selon l'une quelconque des revendications précédentes, dans laquelle le premier et le deuxième modules photovoltaïques (100) sont montés au voisinage l'un de l'autre,
**caractérisée en ce que** l'élément de support (12, 14) est réalisé en une pièce, en particulier sous forme d'élément de support profilé.

14. Utilisation d'un élément de support en une pièce selon la revendication 13, **caractérisée en ce que** la première et la deuxième faces d'accrochage (22 ou 32) s'étendent dans des plans parallèles et/ou il est prévu entre les faces d'accrochage (22 ou 32) une partie intermédiaire, qui est disposée sous un angle compris entre 0° et 60°, de préférence entre 5° et 45°, et de préférence encore entre 10° et 30°, par rapport aux faces d'accrochage respectives.
